# EUROPEAN PATENT SPECIFICATION

(11) **EP 2 447 199 B1**
(45) Date of publication and mention of the grant of the patent: **03.07.2013**
(21) Application number: 10014216.5
(22) Date of filing: 02.11.2010
(51) Int. Cl.: B65H 49/08, B23K 9/133

(54) **Retainer for welding wire container, having fingers and half-moon shaped holding tabs**
Halterung mit Fingern und halbmondförmigen Haltelaschen für einen Schweißdrahtbehälter
Retenue pour conteneur de fil pour soudure disposant de pattes de fixation en forme de doigts et demi-lune

(43) Date of publication of application: 02.05.2012
(73) Proprietor: SIDERGAS SpA, 37010 S. Ambrogio di Valpolicella (IT)
(72) Inventor: Gelmetti, Carlo, 37017 Lazise (VR) (IT)
(74) Representative: Kitzhofer, Thomas

(56) References cited:
- EP-A1- 2 168 706
- WO-A1-03/106096
- WO-A1-2007/112972
- US-A- 5 845 862

## Description

The invention relates to a retainer for a welding wire coil.

In the welding automation processes, the use of bulk containers with larger quantities of welding wire is increasingly popular since a reduction of welding wire spool changes contributes to reduce the downtime and increases the productivity and cost savings.

However, the welding wire being paid out from the container could be affected by feeding problems and tangles which would compromise the savings offered by the lesser number of spool changes.

For the control of the strands of welding wire being paid out from the container many systems have been adopted, some represented by a single element, some with more elements interacting with one another, and some made of different materials but all the solutions adopted. Examples can be found in EP 1 295 813 A2, JP 2001 026375, US 5,845,862, US 6,547,176, US 5,277314, US 5,746,380 and US 7,004,318. Even those retainers which are floating with the wire do usually not interact dynamically with the variables of welding wire coils being wound by different machines, with different adjustments, with varying sizes of welding wire and varying dimensions of the containers. The coil of wire is sometimes offset from the center of the pack and the thickness of the coil varies depending on the machine adjustment and the wire diameter.

WO 2007/112972 teaches of a combined retainer formed by a base element with openings that accommodate the holding fingers of an upper element, the holding fingers being inserted into the openings of the base element and are designed for grabbing the wire before it falls into the center of the pack. In fact most tangling is caused by strands of wire that could fall into the center of the container out of the control of the retainer, and would knot as a consequence of bad adjustment of the wire feeder rolls or tangle after catching against the conical or cylindrical core member often used in the packs.

A problem with WO 2007/112972 is represented by the variable of the coil width which is rarely consistent for a number of reasons, in particular machine adjustment, winding pattern changing with changing of wire diameter, and wire strands settling down into the container as a consequence of vibrations during handling and transport. One additional problem with WO 2007/112972 is that both the base and the upper element are made with rigid material, and the holding fingers, depending on their placement could deform the wire when they come in contact with the strand being paid from the container.

Also, if the welding wire stops shortly before the holding finger, the holding finger will oppose more resistance when the touch the wire right after the welding operation is resumed.

The object of the present invention is to provide a retainer which perfectly holds the welding wire in its proper position, even if the welding wire coil settles during transportation and for varying diameters of the welding wire coil.

For this purpose, the invention provides a retainer for a welding wire coil, which retainer has a base element and at least one upper element which rests on the base element. The base element has a central opening for allowing the welding wire to pass through, and at least two guiding openings through which holding fingers extend. The holding fingers are part of the upper element and are made from a flexible material. The length of the guiding opening is slightly larger than the length of the holding finger so that the free end of the holding finger can dip into the guiding opening. This ensures that the free end of the holding fingers does not obstruct withdrawal of the welding wire through the central opening.

Preferably, four guiding openings are provided which are evenly spaced in a peripheral direction. This number of openings has proven sufficient for controlling the wire under a plurality of different conditions.

According to a preferred embodiment, pressing parts are provided which act on the holding fingers so as to bend them downwardly. The pressing parts exert a downwardly acting force which adds to the force resulting from the flexibility of the holding fingers, thereby ensuring that the holding fingers maintain contact with the upper portion of the welding wire coil.

Preferably, the pressing parts are formed integrally with the base element. This reduces manufacturing expenses.

According to an advantageous embodiment, each of the holding fingers is provided with a projecting reinforcement which contacts an associated one of the pressing parts, the reinforcement being arranged between the free end of the holding finger and the upper element. The projecting reinforcement increases the displacement which the pressing part exerts on the holding finger, resulting in the holding finger being pressed reliably downwardly.

According to an embodiment of the invention, the upper element is made from a flexible material, the holding fingers being formed integrally with the upper element. This avoids additional steps for mounting the holding fingers to the upper element.

According to a preferred embodiment, a plurality of separate upper elements is provided, each of the holding fingers being integrally formed with one of the upper elements. This results in the upper elements each being very small so that less material is required. Accordingly, the elements formed from the upper element together with the holding finger can be produced from a high quality rubber material without significantly increasing the entire manufacturing costs.

Preferably, each of the upper elements is clamped to the base element. This allows mounting the holding fingers in a simple but reliable manner.

For clamping the upper elements to the base element, it is preferably provided that each guiding opening features two holding ribs which extend transversely to the longitudinal direction of the guiding opening. This allows to insert the upper element into the space between the holding ribs such that the upper element is reliably held in place.

In order to prevent that the upper element together with the holding finger becomes detached from the base element, each of the upper elements preferably has two positioning blocks which cooperate with at least one of the holding ribs. The positioning blocks form a simply but effective means for holding the upper elements in place despite the frequent bending movements which occur during withdrawal of the welding wire.

The invention further provides a container for welding wire, having a body, a welding wire coil contained in the body, and a retainer which sits on top of the welding wire coil so as to descend freely when the welding wire is being consumed, the retainer having a base element and at least one upper element which rests on the base element, the base element having a central opening for allowing the welding wire to pass through, and at least two guiding openings through which holding fingers extend, the holding fingers being part of the upper element and being made from a flexible material, the holding fingers interacting with the welding wire coil so as to control pay-out of the welding wire. The elastic holding fingers stay in contact with the upper turns of the welding wire so as to prevent them from falling into the interior of the coil and from entangling.

Further features and advantages of the invention will be apparent from the following description of the embodiments and the attached drawings to which reference is made and in which:
- Figure 1 shows a schematic, perspective view of a welding wire retainer according to the prior art,
- Figure 2 shows a side view of a welding wire container with the retainer of Figure 1 in an initial condition,
- Figure 3 shows a side view of a welding wire container with the retainer of Figure 1 in a second condition,
- Figure 4 shows a perspective view of another retainer according to the prior art,
- Figure 5 shows a side view of a welding wire container with the retainer of Figure 4 in an initial condition,
- Figure 6 shows a side view of a welding wire container with the retainer of Figure 4 in a second condition,
- Figure 7 shows a side view of a retainer according to a first embodiment of the invention,
- Figure 8 shows the retainer of Figure 7 in a top view,
- Figure 9 shows a cross section along line A-A of Figure 8 at an enlarged scale,
- Figure 10 shows a cross section along line B-B of Figure 8 at an enlarged scale,
- Figure 11 shows a top view of the retainer according to a second embodiment of the invention,
- Figure 12 shows a schematic cross section with the retainer according to the second embodiment in use,
- Figure 13 shows a schematic cross section through the retainer according to the second embodiment along line XIII-XIII of Figure 11,
- Figure 14 shows an upper element with holding finger used in the retainer according to the second embodiment, and
- Figure 15 shows the upper element in a top view.

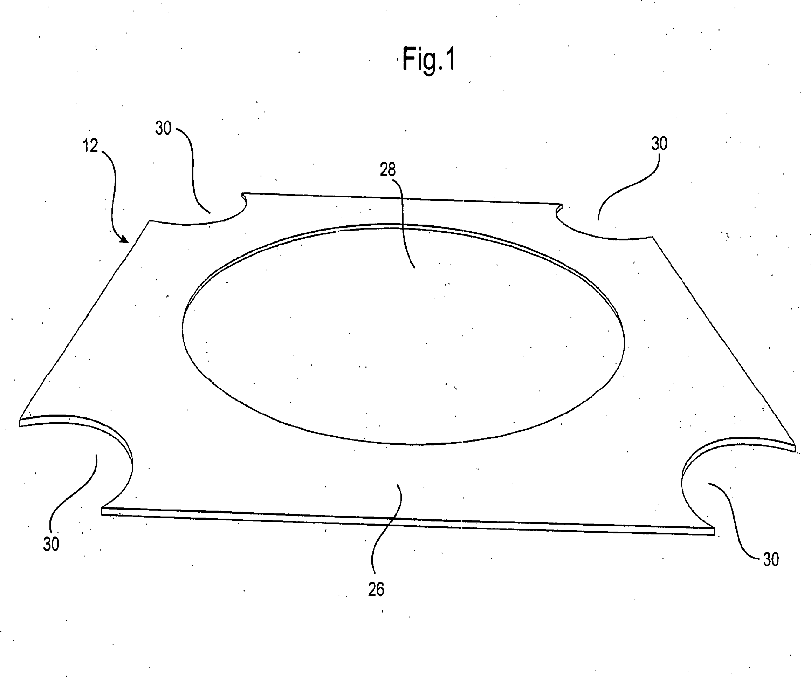

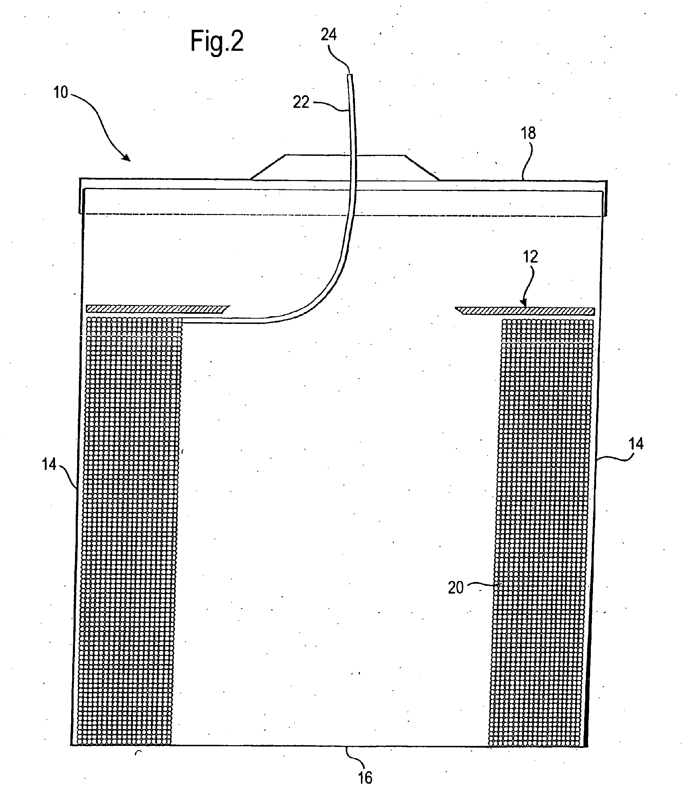

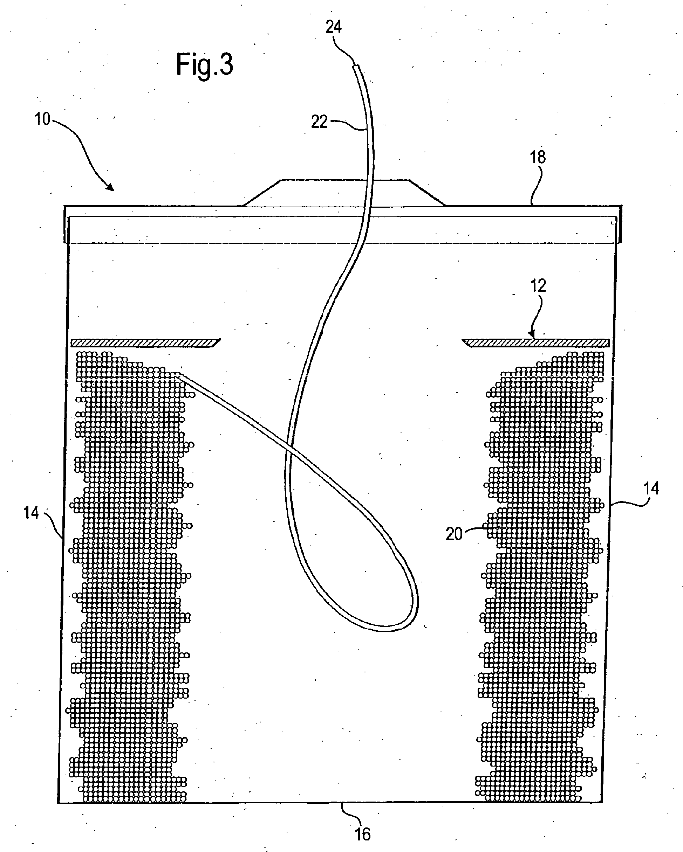

A welding wire container 10 with a welding wire retainer 12 as known from the prior art is shown in Figures 1 to 3. The container 10 has a rectangular cross section, side walls 14 (two side walls are shown), a bottom 16 and a lid 18.

In the interior of the container 10, a welding wire coil 20 is accommodated. The welding wire coil 20 consists of a certain amount of welding wire 22 which is coiled so as to form a hollow body with a ring-shaped cross section. The beginning of the welding wire 22 is designated with reference number 24, and the end portion of the welding wire 22 can be fixed to the bottom 16 (not shown).

On the upper side of the welding wire coil 20, the retainer 12 is provided. The retainer 12 has a plate-like body 26 (please see Figure 1) with a central opening 28 and one recess 30 in each corner to receive reinforcement elements (not shown), which are arranged in the corners of the container 10 to increase the stability of the container 10.

The retainer 12 lies on the upper side of the welding wire coil 20, the retainer 12 being always parallel to the lid 18.

During transportation of the container 10, vibrations might cause the welding wire 22 to settle and sag inwardly. Accordingly, the top surface of the welding wire coil 20 is no longer flat and level but has an upper surface which represents a portion of a cone with the inner portion of the upper coil surface being at a lower level than its outer portion. Then, the retainer 12 can not adapt on the top surface of the welding wire coil 20 and can not contact the entire upper surface of the welding wire coil 20. Therefore, the welding wire 22 is not held in its proper position by the retainer 12 and can entangle.

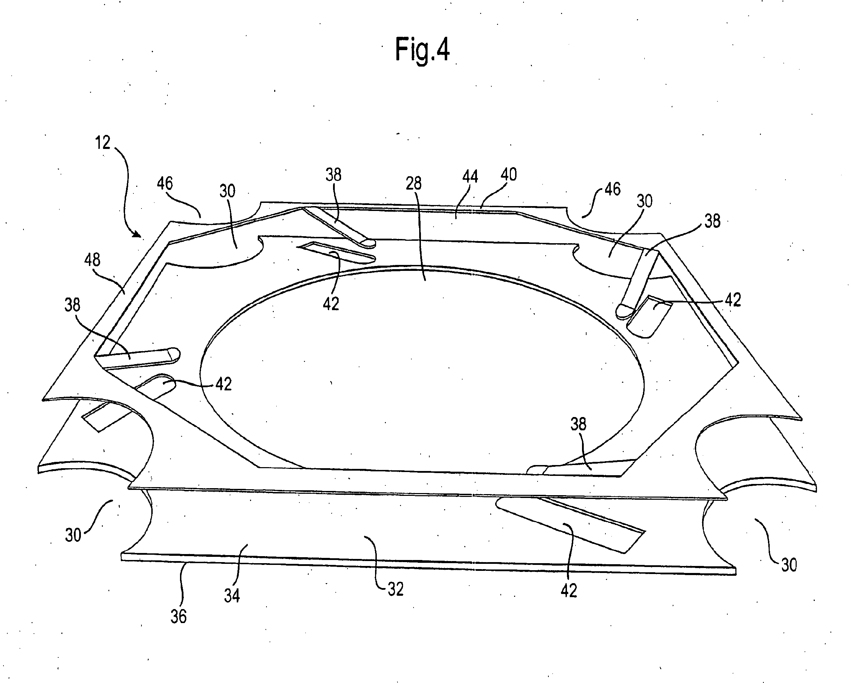

In Figures 4 to 6, a retainer as known from WO 2007/112972 is shown. The retainer 12 has a plate-like base element 32 with a central opening 28 and four recesses 30 for receiving not shown reinforcement elements. The reinforcement elements are arranged in the corners of the container 10 to increase the stability of the container 10. The base element 32 comprises an upper surface 34 and a lower surface 36. The lower surface 36 can engage the top surface of the welding wire coil 20.

The retainer 12 has four holding fingers 38 extending downwardly beyond the lower surface 36 of the retainer 12 to engage the welding wire coil 20 and hold the welding wire 22 in its proper position as to prevent entangling of the welding wire 22. The holding fingers 38 extend in a direction which is oblique with respect to the plane in which the base element 32 lies. In particular, the holding fingers 38 reach to a point in the interior of the welding wire container 10 which is at a lower level than the base element 32. Of course, the number of holding fingers can vary so that more or less than four holding fingers can be arranged.

The retainer 12 has two parts, namely the base element 32 which sits on the upper surface of the welding wire coil 20, and an upper element 40, the upper element 40 being arranged on top of the base element 32.

The base element 32 has four openings 42, the holding fingers 38 being arranged at positions corresponding to the openings 42 of the base element 32 so that each holding finger 28 extends through one of the openings 42. The holding fingers 38 are part of the upper element 40.

Upper element 40 is frame-like and has a polygonal central opening 44 as well as four recesses 46, one recess 46 being positioned in a corner for receiving the reinforcement elements (not shown).

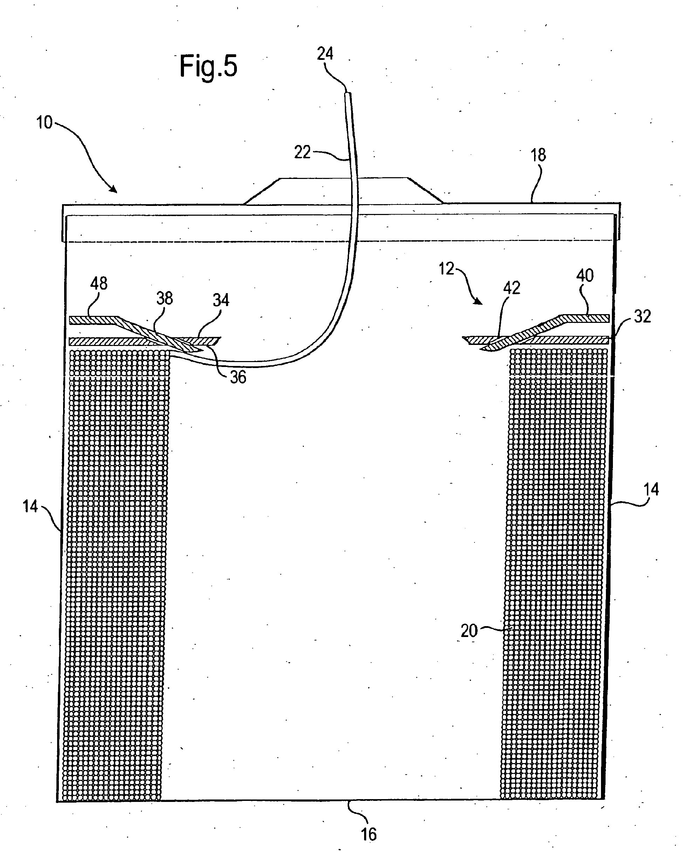

Figure 5 shows the welding wire coil 20 in its initial condition in which the top surface of the coil 20 is flat and level. Here, there is a surface contact between the flat base element 32 of the retainer 12 and the top surface of the coil 20. The upper element 40 of the retainer 12, in particular its frame-like portion 48, is held spaced apart from the base element 32 as the holding fingers 38, with their inner ends, lie on top of the welding wire coil 20. Especially, the holding fingers 38 lie on the inner portion of the coil 20. The upper element 40 which is arranged on top of the base element 32 rests there due to its own weight. No additional biasing means are provided. The basic retaining effect is provided by the base element 32 of the retainer 12 which contacts the top surface of the welding wire coil 20. Additional retaining effect is provided by the four holding fingers 38 which assist in holding the respective upper welding wire 22 at its correct position.

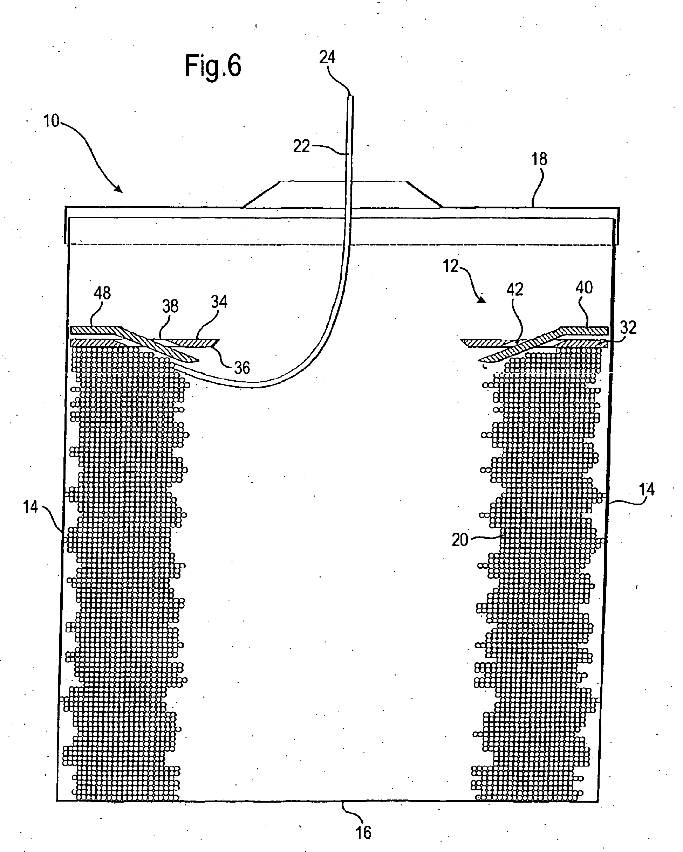

Figure 6 shows the welding wire coil 20 in a second condition in which the welding wire 22 has sagged inwardly. The surface of the welding wire coil 20 is no longer flat and level but has an upper surface which represents a portion of a cone with the inner portion of the coil 20 being at a lower level as its outer portion. The upper element 40 has moved downwardly with respect to the base element 32 under its own weight because the holding fingers 38 are still in contact with the top surface of the welding wire coil 20, especially the inner portion of the coil 20, and the inner portion is in this condition at a lower level than in its initial condition and oblique with respect to the plane in which the base element 32 lies.

The base element 32 basically serves for retaining the welding wire 22 in the radially outward portions of the welding wire coil 20 while the holding fingers 38 of the upper element 40 retain the welding wire 22 at the four locations where the holding fingers 38 are provided.

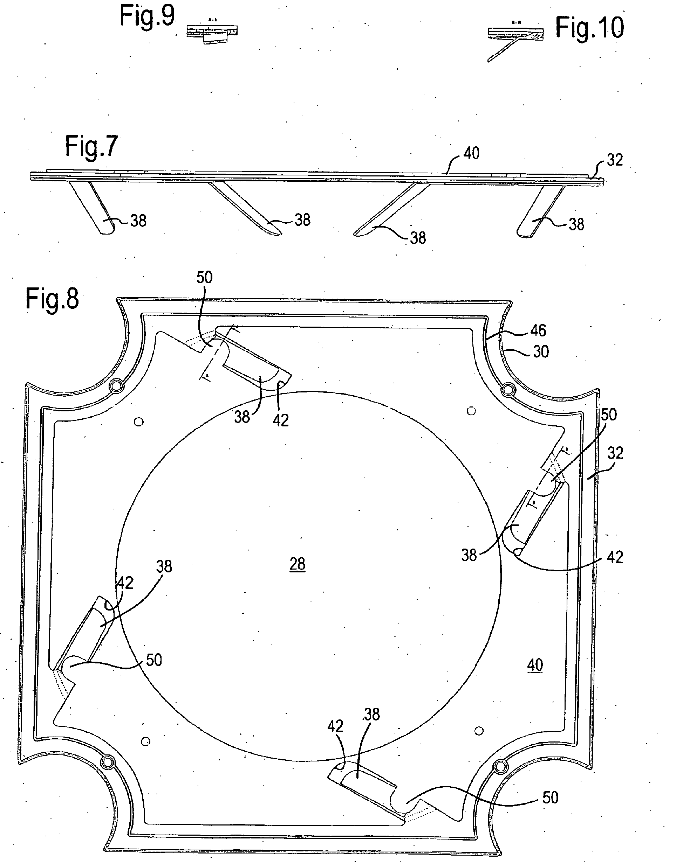

A retainer according to a first embodiment of the invention is shown in Figures 7 to 10. For the features known from the embodiment of Figures 4 to 6, the same reference numerals are used, are reference is made to the above explanations.

The most significant difference between the first embodiment of the invention and the embodiment shown in Figures 4 to 6 is that in the first embodiment of the invention, the holding fingers 38 provided on the upper element 32 are flexible and elastic. In other words, they have spring-like properties so that they tend to return into their original position when they are subjected to a load and are deflected. The resiliency of the holding fingers is due to the properties of the material they are made from. Preferably, an elastic plastic material is used. As an alternative, rubber could be used.

The base element can be rigid or flexible but this will have little impact on the actual performance of the retainer. The upper element immediately in contact with the base must be made of flexible material like rubber silicon or cloth. The yieldingness of the upper element together with the flexibility and elasticity of the holding fingers results in a strong interaction between the base element of the retainer and the upper retainer element.

The holding fingers can have various shapes and do not necessarily have to be attached or molded together with the upper element. They could be formed separately and attached to the upper element later.

Another difference between the first embodiment of the invention and the embodiment according to Figures 4 to 6 is that in the subject embodiment, base element 32 is provided with pressing parts 50 which engage the holding fingers 38 and maintain the flexible holding fingers of the upper element constantly and dynamically pushed against the wire coil. This effect occurs regardless of the coil varying width, but at the same time release the strand of wire being paid out with little attrition and no deformation.

Pressing parts 50 can be additionally added, inserted, glued, screwed or simply laid on top of the upper plate so as to retrofit existing retainers. They can be made from plastic or aluminum. In the embodiment shown in the drawings, pressing parts 50 are formed integrally with base element 32.

As an alternative, the pressing parts can be part of an additional upper retainer element having e.g. the shape of a plate, and which is placed on top of the upper element 40. The additional upper retainer element can have short projections pressing on the flexible holding fingers of the second plate.

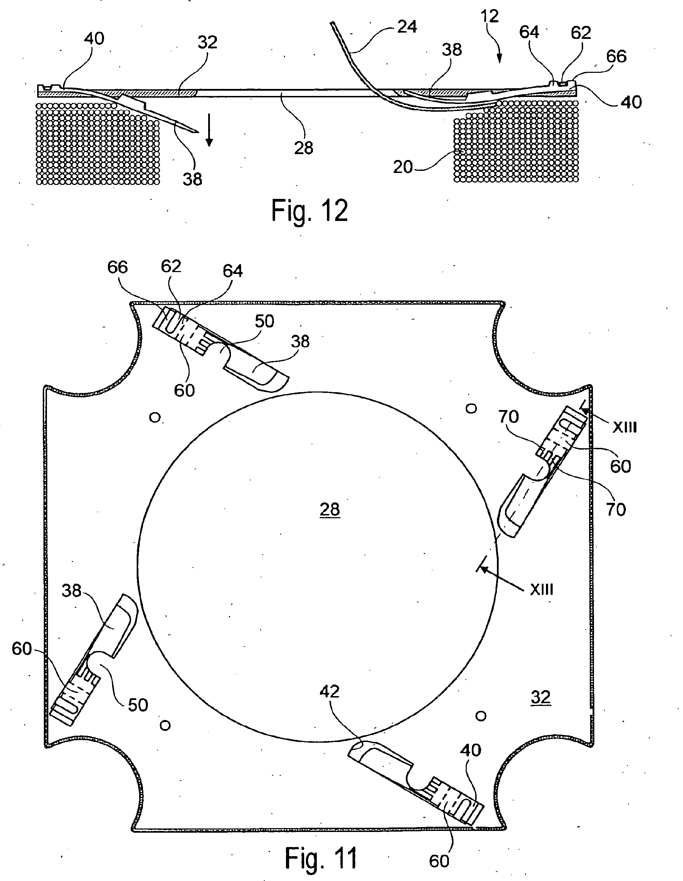

A retainer according to a second embodiment of the invention is shown in Figures 11 to 15. For the features known from the previous embodiments, the same reference numerals are being used, and reference is made to the above explanations.

The most significant difference between the first and the second embodiment is that in the second embodiment, each of the holding fingers 38 has its "own" upper element 40. The holding fingers 38 are formed integrally with the upper elements 40 which serve for connecting the holding fingers 38 to the base element 32.

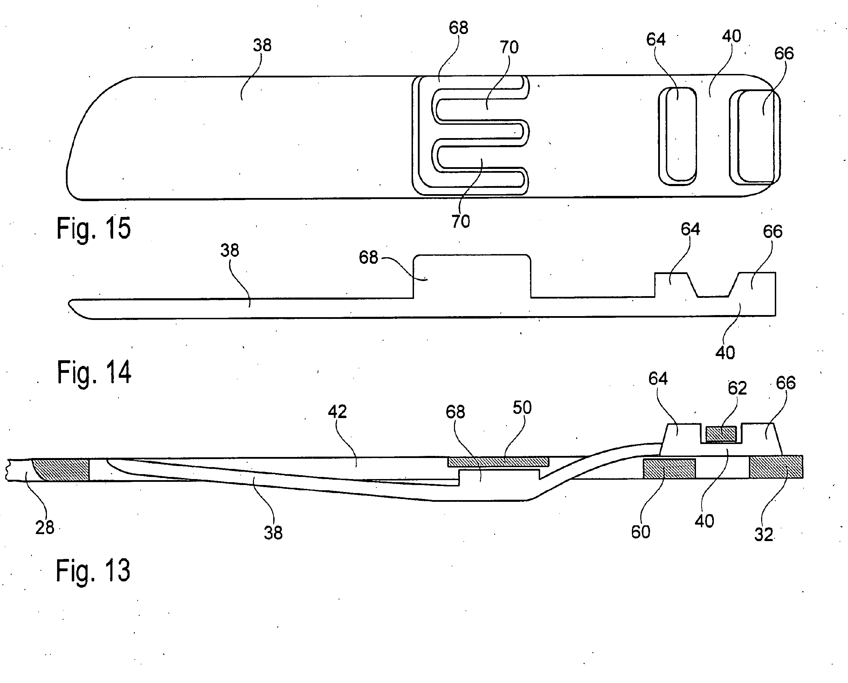

For connecting the holding fingers 38 via the upper elements 40 to the retainer, two holding ribs 60, 62 are provided on the base element 32, which extend transversely to the longitudinal direction of the guiding opening 42. The holding ribs are arranged so as to be displaced with respect to each other in a vertical direction, the inner holding rib 60 being arranged at the lower side of the base element 32 whereas the outer holding rib 62 being arranged at the upper side of the base element (please see in particular Figure 13).

The upper element 40 is provided with two positioning blocks 64, 66 which define between them a groove into which the outer holding rib 62 can engage (please see in particular Figure 12).

Holding finger 38 is formed as a continuous extension of upper element 40. The element formed from the upper element and the holding finger is preferably formed from high quality rubber which ensures the required elasticity over long operating times. On the same side as the positioning blocks 64, 66 are arranged, holding finger 38 features a projecting, bump-like reinforcement 68 which is block-like with grooves 70 on its upper side. Provision of the grooves improves the elasticity and further saves material for forming the holding finger. Reinforcement 68 is arranged approximately half-way between the outer end of the upper element 40 and the free end of holding finger 38, and is adapted to cooperate with pressing part 50 formed on base element 32. The length of the holding finger 38 is chosen such that it, in a mounted condition, can be bent upwardly so as to dip with its free end into guiding opening 42 (please see Figure 12; right holding finger).

The upper elements 40 together with their holding fingers 38 are mounted to the base element by clamping the upper element between the holding ribs 60, 62 and the upper surface of the retainer "behind" guiding opening 42 (please see Figure 13 in which the holding finger together with the upper element 40 is schematically shown with a dashed line in a mounted condition). Pressing part 50, in co-operation with projecting reinforcement 68, presses holding finger 38 downwardly so that it extends towards the welding wire coil (please see in particular Figure 12; left holding finger 38). When welding wire is being withdrawn, the welding wire pushes the holding finger 38 upwardly. The free end of the holding finger 38 can dip into the guiding opening 42 (please see Figure 12, right holding finger) so that it does not obstruct welding wire withdrawal and ensures that the welding wire stays in contact with the rounded edge of the retainer surrounding central opening 28. In this condition, the central portion of the holding finger continues to be pressed downwardly, thereby maintaining a controlling effect on the welding wire coil.

According to a variant, a spring can be arranged between the holding finger 38 and the pressing part 50 for biasing the holding finger downwardly. As an additional variant or in combination with a spring or reinforcement 68, pressing part 50 can be formed with an increased thickness so as to protrude downwardly from the base element 32. This also allows to control the extent of the downwardly directed bias which is exerted on the holding finger 38.

## Claims

1. A retainer (12) for a welding wire container, having a base element (32) and at least one upper element (40) which rests on the base element (32), the base element (32) having a central opening (28) for allowing the welding wire to pass through, and at least two guiding openings (42) through which holding fingers (38) extend, the holding fingers (38) being part of the upper element (40) and being made from a flexible material, the length of the guiding openings (42) being slightly larger than the length of the holding fingers (38) so that the free end of the holding fingers (38) can dip into the guiding openings (42).

2. The retainer (12) of claim 1 wherein four guiding openings (42) are provided which are evenly spaced in a peripheral direction.

3. The retainer (12) of any of the preceding claims wherein pressing parts (50) are provided which act on the holding fingers (38) so as to bend them downwardly.

4. The retainer (12) of claim 3 wherein the pressing parts (50) are formed integrally with the base element (32).

5. The retainer (12) of claim 3 or claim 5 wherein the pressing parts (50) protrude downwardly from the base element (32).

6. The retainer (12) of any of claims 3 to 5 wherein a spring element is arranged between the pressing part (50) and the holding finger (38).

7. The retainer (12) of any of claims 3 to 6 wherein each of the holding fingers (38) is provided with a projecting reinforcement (68) which contacts an associated one of the pressing parts (50), the reinforcement (68) being arranged between the free end of the holding finger (38) and the upper element (40).

8. The retainer (12) of any of the preceding claims wherein the upper element (40) is made from a flexible material, the holding fingers (38) being formed integrally with the upper element (40).

9. The retainer (12) of any of the preceding claims wherein a plurality of separate upper elements (40) is provided, each of the holding fingers (38) being connected to one of the upper elements (40).

10. The retainer (12) of claim 9 wherein each of the upper elements (40) is clamped to the base element (32).

11. The retainer (12) of claim 10 wherein each guiding opening (42) features two holding ribs (60, 62) which extend transversely to the longitudinal direction of the guiding opening (42).

12. The retainer (12) of claim 11 wherein each of the upper elements (40) has two positioning blocks (64, 66) which cooperate with at least one of the holding ribs (60, 62).

13. A container (10) for welding wire (22), having a body, a welding wire coil contained in the body, and a retainer (12) as defined in any of the preceding claims and which sits on top of the welding wire coil (20) so as to descend freely when the welding wire (22) is being consumed, the holding fingers (38) interacting with the welding wire coil (20) so as to control pay-out of the welding wire (22).

## Patentansprüche

1. Halterung (12) für einen Schweißdrahtbehälter, mit einem Basiselement (32) und mindestens einem oberen Element (40), das auf dem Basiselement (32) ruht, wobei das Basiselement (32) eine mittige Öffnung (28) zum Hindurchführen des Schweißdrahtes und mindestens zwei Führungsöffnungen (42) aufweist, durch die sich Haltefinger (38) erstrecken, wobei die Haltefinger (38) Bestandteil des oberen Elements (40) sind und aus einem biegsamen Material bestehen, wobei die Länge der Führungsöffnungen (42) etwas größer ist als die Länge der Haltefinger (38), so dass das freie Ende der Haltefinger (38) in die Führungsöffnungen (42) eintauchen kann.

2. Halterung (12) nach Anspruch 1, wobei vier Führungsöffnungen (42) vorgesehen sind, die in Umfangsrichtung gleichmäßig beabstandet sind.

3. Halterung (12) nach einem der vorhergehenden Ansprüche, wobei Anpressteile (50) vorgesehen sind, die auf die Haltefinger (38) wirken, um sie nach unten zu biegen.

4. Halterung (12) nach Anspruch 3, wobei die Anpressteile (50) mit dem Basiselement (32) einstückig ausgebildet sind.

5. Halterung (12) nach Anspruch 3 oder Anspruch 5, wobei die Anpressteile (50) von dem Basiselement (32) nach unten ragen.

6. Halterung (12) nach einem der Ansprüche 3 bis 5, wobei ein Federelement zwischen dem Anpressteil (50) und dem Haltefinger (38) angeordnet ist.

7. Halterung (12) nach einem der Ansprüche 3 bis 6, wobei jeder der Haltefinger (38) mit einer hervorstehenden Verstärkung (68) versehen ist, die mit dem jeweils zugehörigen Anpressteil (50) in Kontakt steht, wobei die Verstärkung (68) zwischen dem freien Ende des Haltefingers (38) und dem oberen Element (40) angeordnet ist.

8. Halterung (12) nach einem der vorhergehenden Ansprüche, wobei das obere Element (40) aus einem biegsamen Material besteht und die Haltefinger (38) mit dem oberen Element (40) einstückig ausgebildet sind.

9. Halterung (12) nach einem der vorhergehenden Ansprüche, wobei mehrere getrennte obere Elemente (40) vorgesehen sind, wobei jeder der Haltefinger (38) mit einem der oberen Elemente (40) verbunden ist.

10. Halterung (12) nach Anspruch 9, wobei jedes der oberen Elemente (40) an dem Basiselement (32) festgeklemmt ist.

11. Halterung (12) nach Anspruch 10, wobei jede Führungsöffnung (42) zwei Halterippen (60, 62) aufweist, die sich quer zur Längsrichtung der Führungsöffnung (42) erstrecken.

12. Halterung (12) nach Anspruch 11, wobei jedes der oberen Elemente (40) zwei Positionierungsblöcke (64, 66) aufweist, die mit mindestens einer der Halterippen (60, 62) zusammenwirken.

13. Behälter (10) für Schweißdraht (22), mit einem Körper, einer in dem Körper enthaltenen Schweißdrahtspule und einer Halterung (12) nach einem der vorhergehenden Ansprüche, die oben auf der Schweißdrahtspule (20) sitzt, um sich frei nach unten zu bewegen, wenn der Schweißdraht (22) verbraucht wird, wobei die Haltefinger (38) mit der Schweißdrahtspule (20) interagieren, um die Abgabe des Schweißdrahtes (22) zu steuern.

## Revendications

1. Support (12) pour un réceptacle de fil à souder, comportant un élément de base (32) et au moins un élément supérieur (40) reposant sur l'élément de base (32), l'élément de base (32) présentant une ouverture centrale (28) permettant au fil à souder de passer, et au moins deux ouvertures de guidage (42) traversées par des doigts de retenue (38), les doigts de retenue (38) faisant partie de l'élément supérieur (40) et étant réalisés à partir d'un matériau flexible, la longueur des ouvertures de guidage (42) étant légèrement supérieure à la longueur des doigts de retenue (38), de telle sorte que l'extrémité libre des doigts de retenue (38) est capable de s'introduire dans les ouvertures de guidage (42).

2. Support (12) selon la revendication 1, dans lequel sont prévues quatre ouvertures de guidage (42) qui sont espacées de façon régulière dans une direction périphérique.

3. Support (12) selon l'une des revendications précédentes, dans lequel sont prévues des parties de serrage (50) qui agissent sur les doigts de retenue (38) de manière à les plier vers le bas.

4. Support (12) selon la revendication 3, les parties de serrage (50) étant formées intégralement avec l'élément de base (32).

5. Support (12) selon la revendication 3 ou selon la revendication 5, les parties de serrage (50) faisant saillie de l'élément de base (32) vers le bas.

6. Support (12) selon l'une des revendications 3 à 5, un élément à ressort étant agencé entre la partie de serrage (50) et le doigt de retenue (38).

7. Support (12) selon l'une des revendications 3 à 6, chacun des doigts de retenue (38) étant pourvu d'un renforcement saillant (68) qui vient en contact avec une partie associée parmi les parties de serrage (50), le renforcement (68) étant agencé entre l'extrémité libre du doigt de retenue (38) et l'élément supérieur (40).

8. Support (12) selon l'une des revendications précédentes, l'élément supérieur (40) étant réalisé en un matériau flexible, les doigts de retenue (38) étant formés intégralement avec l'élément supérieur (40).

9. Support (12) selon l'une des revendications précédentes, dans lequel sont prévus plusieurs éléments supérieurs (40), chacun des doigts de retenue (38) étant connectés à l'un des éléments supérieurs (40).

10. Support (12) selon la revendication 9, dans lequel chacun des éléments supérieurs (40) est serré sur l'élément de base (32).

11. Support (12) selon la revendication 10, dans lequel chaque ouverture de guidage (42) présente deux nervures de retenue (60, 62) qui s'étendent perpendiculairement à la direction longitudinale de l'ouverture de guidage (42).

12. Support (12) selon la revendication 11, dans lequel chacun des éléments supérieurs (40) comprend deux blocs de positionnement (64, 66) qui coopèrent avec l'une au moins des nervures de retenue (60, 62).

13. Réceptacle (10) pour fil à souder (22), comprenant un corps, un rouleau de fil à souder contenu dans le corps, et un support (12) tel que défini dans l'une des revendications précédentes et qui est posé sur le dessus du rouleau de fil à souder (20), de manière à descendre librement lorsque le fil à souder (22) est consommé, les doigts de retenue (38) interagissent avec le rouleau de fil à souder (20) de manière à contrôler le débit du fil à souder (22).
